# EUROPEAN PATENT SPECIFICATION

(11) **EP 3 083 112 B1**
(45) Date of publication and mention of the grant of the patent: **25.09.2019**
(21) Application number: 14800062.3
(22) Date of filing: 20.11.2014
(51) Int. Cl.: B22F 5/10, B22F 3/24, B22F 5/00, F02M 61/16, B22F 3/15, B22F 7/08

(54) **A METHOD FOR MANUFACTURING A CLADDED COMPONENT BASED ON HIP**
VERFAHREN ZUR HERSTELLUNG EINER PLATTIERTEN KOMPONENTE DURCH HIP
PROCÉDÉ DE FABRICATION D'UN COMPOSANT REVÊTU À BASE DE HIP

(30) Priority: 20.12.2013 EP 13198979
(43) Date of publication of application: 26.10.2016
(73) Proprietor: Sandvik Intellectual Property AB, 811 81 Sandviken (SE)
(72) Inventor: BERGLUND, Tomas, S-791 93 Falun (SE); ÖSTLUND, Martin, S-802 52 Gävle (SE); LINDGREN, Tommy, S-735 91 Surahammar (SE); JOHANSSON, Fredrik, S-723 55 Västerås (SE)
(74) Representative: Sandvik
(86) International application number: PCT/EP2014/075108
(87) International publication number: WO 2015/090830

(56) References cited:
- WO-A1-2004/030850
- US-A- 5 004 653

## Description

### TECHNICAL FIELD

The present invention relates to a method for manufacturing a metallic body having a core and a cladding according to the preamble of claim 1.

### BACKGROUND ART

Hot Isostatic Pressing (HIP) is a conventional method for manufacturing components of metallic material. The method allows for manufacturing of complex components in near-net shape and also for integration of different materials in the same product. In HIP, a steel capsule which defines the final shape of the component is filled with metallic powder and thereafter subjected to high temperature and high pressure so that the particles of the metallic powder bond into a solid component.

Hot Isostatic Pressing may be used to apply claddings of metallic materials onto pre-manufactured cores. WO2004/030850A1 describes a method for manufacturing fuel valve nozzles. According to the method, a metallic tube section is arranged to form a space around a pre-forged nozzle core. The space is filled with metallic powder and the arrangement is enclosed in a capsule and subjected to HIP so that the metallic powder, the core and the tube section bond to a solid component.

A similar method for manufacturing a valve nozzle is described in Applicants European Patent Application EP12173411. This method comprises the steps of forming a solid blank in a metal machining operation into a pre-manufactured body which comprises a bottom wall from which a core extends and a lateral wall which encloses a space around core. The space is filled with metal cladding material and closed by an upper wall and subsequently subjected to HIP.

After HIP, the solid components are typically subjected to machining in order to expose the cladding on the core. Typically, machining is performed by turning or milling.

However, often the final consolidated component is deformed during the HIP process. The deformation causes a problem in the machining of the component since it becomes difficult to accurately clamp and center the component in the machining tool. As a consequence thereof, the dimensions of the cladding may not be very accurate. A further drawback with the prior art is that the machining of the components is time consuming and costly due to cumbersome manual labor and a poor yield of acceptable components.

Consequently, it is an object of the present invention to present an improved method which allows for manufacturing by HIP of metallic components having a cladding whereby the cladding on the final components has low thickness variation. A further object of the present invention is to achieve a cost effective method for manufacturing of metallic components having a cladding. Yet a further object of the present invention is to present a method for manufacturing of metallic component having a cladding whereby the method can be performed in short time and with little effort.

### SUMMARY OF THE INVENTION

According to the invention at least one of the above objects is achieved by a method for manufacturing a metallic component 50 having a core 5 and a metallic cladding 60, comprising the following steps:
- arranging a capsule 10 and a core 5 such that the capsule 10 at least partially surrounds the core 5 and such that a space 6 is formed between at least a portion of the core 5 and a portion of the capsule 10;
- filling the space 6 with metallic cladding material 8 such that the metallic cladding material 8 covers at least a portion of the core 5;
- evacuating air from the capsule (10) and sealing the capsule 10;
- subjecting the capsule 10 to Hot Isostatic Pressing (HIP) at a predetermined temperature, a predetermined pressure and for a predetermined time so that the cladding material 8 is bonded to the core 5 and a solid body 20 is formed;
- subjecting the solid body 20 to a metal machining operation in which the cladding material 8 is machined in a metal machining apparatus 30 to a metallic cladding 60 of a predetermined thickness; characterized in that
- the core 5, prior to the step of Hot Isostatic Pressing, is provided with at least one centering means 11, 12 for centering the solid body 20 obtained in the step of Hot Isostatic Pressing in the metal machining apparatus 30 and
wherein the solid body 20 is centered in the metal machining apparatus 30 by engagement between the at least one centering means 11, 12 in the solid body 20 and at least one corresponding center 34, 36, 64 in the metal machining apparatus 30, 60.

By providing at least one centering means in the core prior to the step of Hot Isostatic Pressing it is possible to accurately center the solid body in a machining tool with respect to the center of core of the solid body, even if the solid body is deformed due to the HIP process. By subsequently machining the metallic cladding to a predetermined thickness which is determined as a distance from the center of the core, the thickness of the cladding on the core may be held within a very narrow tolerance range.

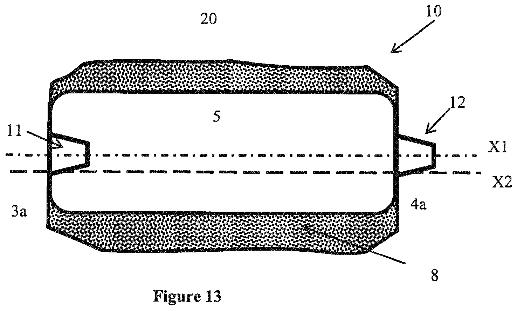

The principle of invention is further explained with reference to figure 13. Figure 13 shows schematically a longitudinal cross-section of a solid HIP:ed component 20 comprising a core 5 comprising a first surface 3a, a second surface 4a and a core portion 5a. The core portion 5a is embedded in a metallic cladding material 8 and the end surfaces 3a, 4a are exposed, i.e. not covered by cladding material. A capsule 10 surrounds the solid body. Centering means 11, 12 in the form of a protruding truncated cone and a truncated cone recess are provided in the first and second end surfaces 3a, 4a.

Figure 13, illustrates schematically the deformation that has occurred in the solid body during the HIP process. This deformation is to a certain extent often anisotropic and in particularly in the case of elongated cylindrical components, the periphery of the HIP:ed body may be unevenly deformed.

It should however be appreciated that figure 13 is schematic and that the anisotropic nature of the deformation is strongly exaggerated for illustrative reason. In reality the deformation is also much more complicated.

According to the invention, the centering means 11 and 12 are applied prior to HIP in the center of the end surfaces 3a and 4a of the core 5 (position XI). During densification, the periphery of the solid body 20 is deformed anisotropic in radial direction. However, the position of the centering means 11 and 12 in the end surfaces 3a and 4a of the core is not affected by the deformation. When the solid body subsequently is subjected to a machining operation, for example turning, the solid body will be centered along the line X1 by corresponding centers in the machining tool. The solid body will then be centered with respect to the true center of the core 5 and the machining operation will yield a cladding with a very small thickness variation around the core.

In the case of conventional manufacturing of a cladded component (which does not comprise centering means), the end of the solid body 20 is typically gripped by a chuck and the solid body will therefore be centered with respect to the center of the chuck. However, since the circumference of the solid body is deformed anisotropic, the center of the chuck will not be aligned with the center of the core. Instead, the solid body will be centered along the line X2 which is offset from the center of the core. When the solid body is machined the offset centering will cause the solid body to rotate eccentrically and cause the thickness to vary on the core.

### BRIEF DESCRIPTION OF DRAWINGS

Figures 1 - 6 shows schematically the general steps of the inventive method.
Figures 7 - 12 shows schematically alternatives of the inventive method.
Figure 13 is a schematically illustration of a solid body produced by the inventive method and explains the principle behind the invention.

### DETAILED DESCRIPTION OF THE INVENTION

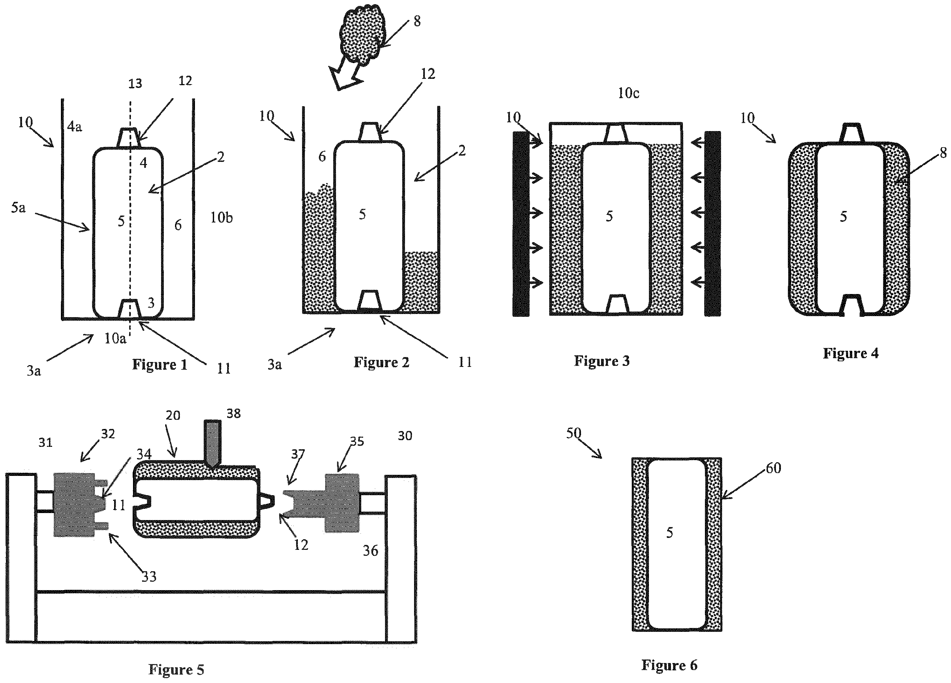

The inventive method will in the following be described in a general manner with reference to figures 1 - 6. For illustrative purposes the invention is described in figures 1 - 6 with reference to a cladded roll. However, the present invention is applicable for manufacturing of any type of component which comprises a core with a cladding with very narrow thickness tolerances.

In a first step, see figure 1, a core 5 is provided. The core 5 comprises a solid core portion 5 and a first end 3 and a second end 4. In figure 1 the core is intended for manufacturing a roll, such as a roll for hot rolling of sheet metal, and is therefore an elongated cylinder with uniform circular cross-section. However, depending on the component in question the design of the core 5 may be more complicated. The core may have any shape, cross-section and dimension. For example, the core design may include elongated bars of elliptical, triangular, rectangular or hexagonal cross-section, complex geometries such as mushroom shapes, branched cores etc.

The core may for example be manufactured by forging, casting or by machining of a solid piece of material, for instance. The material of the core depends on the application in question, one example of a suitable material is tool steel such as AISI H13/SS2242, another example is alloyed, austenitic valve steel such as SNCrW-steel. In the present example, the core is manufactured by machining of a cylindrical bar of tool steel.

According to the invention, at least one centering means 11, 12 is provided in the core 5 prior to the step of Hot Isostatic Pressing. In the present embodiment two centering means 11, 12 are provided in the core 5. Figure 1 show schematically the position of the centering means in the core 5. A first centering means 11 is provided in the first, lower end surface 3a and second centering means 12 is provided in the second, upper, end surface 4a of the core 5. The provision of two centering means makes it possible to accurately center the solid body in a lathe, which is a preferred tool for machining the cladding to a predetermined thickness.

Preferably, the centering means 11 and 12 are located opposite to each other in the center of the first and second end surfaces 3a, 4a or the core 5. Thereby, the centering means 11, 12 are aligned along a straight line 13 which runs longitudinally through the center of the core portion 5 and through the both centering means 11, 12. This allows for very accurate centering in a lathe.

The centering means in both the first and second end surfaces of the core are designed to be engaged by corresponding centers in conventional metal machining apparatuses. According to the present invention, a "metal machining apparatus" also known as "metal machine tool" or "machine tool" may be a metal cutting machine such as a lathe or milling cutter. The metal machining apparatus may also be an Electrical Discharge Machining device.

In the described embodiment, the metal machining apparatus is a lathe. As will be described further below, the centers for lathes are so called "male centers" in form of cones or truncated cones. Alternatively, the centers in lathes are so called "female centers" in the form of a sleeve with a conically, or truncated cone, shaped opening also known as "tapered sleeve". Such centers are commercially available for example by the company Rohm GmbH (ROHM GmbH, Heinrich-Rohm-StraBe 50, 89567 Sontheim/Brenz, Germany).

Consequently, the centering means in the core are in the form of "male centering means" or "female centering means" The male centering means is a protruding element, for example in the form of a cone or a truncated cone. The female centering means is a recess i.e. a bore. For example the female centering means is in the form of a recess or a bore with the shape of a cone or a truncated cone.

In the embodiment shown in figures 1 -5, a female centering means 11 in the form of a truncated cone shaped recess is provided in the first end surface 3a. It is preferred to provide a female centering means in the lower end surface of the core since the core then may be placed steadily in upright position. A male centering means 12, in the form of a protruding truncated cone is provided in the second, upper, end surface 4a of the core.

It is obvious that either a male centering means or a female centering means could be provided in the first end surface or in the second end surface of the core. For example, a male centering means could be provided in the first end of the core and a female centering means in the second end surface or vice versa. It is also possible to provide male centering means in both the first and the second ends of the core. Or to provide female centering means in both first and the second ends of core.

Female centering means, e.g. recesses or bores, the bores may be achieved by drilling or milling. Male centering means, for example cones, or truncated cones, may be achieved by pre-manufacturing steel cones and subsequently attaching the cones to the top or the bottom end surfaces of the core. The cones could be pre-manufactured by turning of cylindrical rods. The pre-manufactured cones may be attached by welding. It is also possible to form the male centering means by machining the core itself.

In the present embodiment, the component is a cylindrical object in the form of a roll and it is therefore suitable to provide the centering means in the end surfaces of the cylindrical core. However, it is obvious that, dependent on the shape of the core and the type of the final component, the centering means may be provided on other surfaces of the core.

In a next step a capsule 10 is provided. The capsule 10, also referred to as mold or form, defines the general outer contour of at least a portion of the final component and is typically manufactured from steel sheets that have been formed into a desired shape and welded together. In the present embodiment, the capsule is cylindrical and comprises a bottom 10a and a circumferential side wall 10b. However, the capsule may have any form suitable for the component in question, for example rectangular. The capsule 10 may for example be manufactured from low carbon steel such as SSAB DC04.

In a further step, the core 5 and the capsule 10 are arranged such that the capsule surrounds at least a portion of the core and such that a space 6 is formed between the capsule and the core, see figure 1. By "arranged" is in this context meant that the shape or the form of capsule and the core as well as their relative positions are adopted such that a space 6 is formed is formed between the capsule and the core. The purpose of the space 6 is to provide a form for the metallic cladding material which subsequently is filled in to the capsule. The physical dimensions of the space 6, such as its height, width and extension therefore determine the limits of the physical dimensions of the cladding on the solid body after HIP.

In the present embodiment, the core 5 is placed on its first end surface 3a in the center of the bottom 10b of the capsule 10. The core 5 and the capsule 10 are positioned such that the core and capsule are coaxial. The core 5 and the capsule 10 are thereby arranged such that a space 6 of uniform radial extension is formed between the walls of the capsule and the surface 5a of core 5, i.e. the cylindrical surface of the core 5. The distance between the cylindrical surface 5a and the inner surface of the capsule wall 10b thereby limits the space 6 in radial direction. In axial direction, the space 6 is limited downwards by the bottom wall 10a of the capsule and upwards by the axial extension of the capsule wall 10b, i.e. the length of the capsule.

In a second step, see figure 2, the space 6 is filled with metallic cladding material 8 so that the core 5 at least partially is covered in metallic cladding material. In figure 3 the entire cylindrical surface 5a of the core5 is embedded in metallic material and the end surfaces 3a, 4a are left uncovered, i.e. free of cladding material. In order not to cover the upper centering means 12 with metallic material, the capsule 10 is only filled up to the second end surface 4a.

Preferably, the metallic cladding material 8 is a metal powder. The advantage of using powder is that the space 6 thereby easily can be completely filled even if the core has a complicated form.

The metallic cladding material 8 has a different chemical composition than the core 5. The present embodiment relates to a roll for cold rolling of steel and therefore the cladding material is powder-metallurgical high-speed steel in order to provide an adequate combination of wear resistance and toughness of the cladding on the final roll.

However, the in the case of other components, such as valve spindles, cladding materials which requests other properties could be used. For example, if the cladding material should be corrosion resistant a nickel-based alloy, for example NiCr49Nb1 or NiCr22A16 or NiCr22MoNbTi could be used. After filling, the metallic cladding material 8 may be compacted by shaking to ensure that all voids are filled in the space 6 (not shown).

Thereafter, a lid 10c with an opening (not shown) is welded over the upper end of the capsule. After filling the capsule may contain air which is trapped in the cladding material

If not removed the trapped air may have a negative effect on the mechanical properties of the HIPed material and bonding. The air is evacuated from the capsule 10 by drawing a vacuum in the capsule. The vacuum is drawn through the opening in the lid to remove the air in the capsule. Subsequently, the opening in the lid is welded shut so that the capsule is sealed. Figure 3 shows a filled and sealed capsule.

Thereafter, the capsule is subjected to Hot Isostatic Pressing (HIP). The capsule with the core and the cladding material is thereby placed in a HIP furnace and subjected to a predetermined temperature and a predetermined pressure for a predetermined period of time so that the metallic cladding material and the core bond to each other into a dense and solid body. Figure 3, shows the filled and sealed capsule 10 in a HIP furnace. Typically, the pressure in the furnace is in the range of 700-1100 bar, preferably, 900-1100 bar, and most preferably around 1000 bar. The temperature is selected to below the melting point of the material with the lowest melting point, or at the lowest temperature at which liquid phase can form. The closer the temperature is to the melting point, the higher is the risk for the formation of melted phases in which brittle streaks could be formed. However at low temperatures, the diffusion process slows down and the HIP:ed material will contain residual porosity and the metallic bond between materials become weak. Consequently, the temperature is in the range of 900-1200°C, preferably 1100-1200°C, and most preferably around 1150°C. The duration of the HIP process depends on the size of the component, however short times are preferred for efficient productivity. Therefore the duration of the HIP-step, once said pressure and temperature has been reached, is in the range of 1-4 hours. After the HIP process has been completed, said solid body may preferably be subjected to any suitable heat treatment, such as annealing. After HIP, the capsule is removed from the solid body, for example by pickling. The capsule may also remain on the solid body and instead be removed during machining of the solid body. Figure 4 shows the solid body after HIP.

In the final step of the inventive method, the solid body is subjected to a machining operation in which the cladding material 8 is machined, by removal of material, to a cladding of predetermined thickness. In the present embodiment of the invention the machining operation is performed by turning in a lathe, but also other machining operations are possible, for example milling or Electric Discharge Machining. During machining the capsule 10, if present, is removed and the cladding is machined to a predetermined thickness.

Figure 5 shows schematically a metal machining apparatus 30 in the form of a lathe, which for example may be of the type Okuma Space Turn LB3000EX. The lathe comprises a head stock 31 to which a face driver 32 is connected. The face driver 32 is rotated by the drive unit of the lathe (not shown) and engages the solid body 20 to rotate it during milling. To engage the solid body, the face driver 32 is provided with hardened drive pins 33 which bite into the end surface 3a of the solid body 20 so that the rotational movement of the face driver is transferred to the solid body 20. In the center of the face driver a male center 34 in the form of a truncated cone is located. The male center 34 of the lathe is adopted to engage the female centering means 11 of the solid body. Hence, a center in the metal machining apparatus is designed so that it may engage a centering means in the solid body and vice versa.

The tailstock 35 of the lathe comprises a female center 36 which consists of a tapered sleeve 37 with an inner shape in the form of a truncated cone. The sleeve 37 is adopted to receive the male centering means 12 in the top wall 9 of the solid body 20. The center further comprises a shaft (not shown) by which it is attached to the tail stock of the lathe. In this case the center is a live center which is rotatable arranged in the tailstock. However, it could also be a so called dead center. A metal cutting tool 38, i.e. a lathe tool or lathe steel is provided to remove metal from the solid body.

In operation the male center 34 of the face drive is inserted into the female centering means 11 in the first end surface 3a of the solid body and the female center 37 of the tailstock of the lathe receives the male centering means 12 in the second end surface 4a of the solid body 20. The face driver presses the solid body towards the female center in the tailstock of the lathe and simultaneously the drive pins 33 are forced into the end surface 3a of the solid body. The solid body is centered in the lathe when both the male and female centers of the lathe are in engagement with the male and female centering means of the solid body. If necessary, the centring means 11, 12 in the solid body 20 may be exposed prior to centring the solid body in the lathe. For example, by removing a portion of the capsule by grinding with a hand held tool.

After centering of the solid body, turning is performed until a cladding of desired thickness is achieved. This is achieved in that the control system of the lathe is programmed with a pre-determined distance between the center of the solid body and the lathe tool. During turning the capsule (if present) is removed by the lathe cutting tool 38 so that the cladding material is exposed. A portion of the exposed cladding material is then also removed in radial direction by the lathe tool until the pre-determined distance is reached and a cladding of a predetermined thickness is obtained.

Figure 6 shows a final component 50 in the form of a roll which comprises a core 5 onto which a machined cladding 60 is applied.

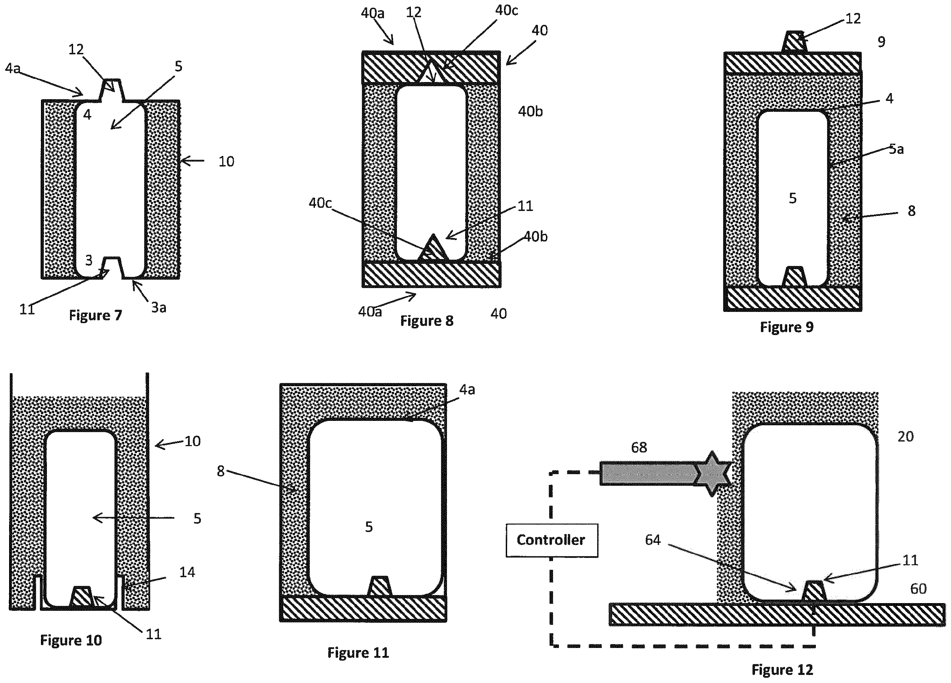

Figures 7 to 12 shows some alternatives of the present invention.

Figure 7 shows an alternative method for manufacturing a cladded component in which the capsule partially encloses the core. In this case the capsule 10 is attached by welding to the first and second ends 3, 4 of the core so that the capsule 10 encloses the cylindrical surface 5a of the core and the cladding material 8. The end surfaces 3a and 4a of the pre-manufactured body, and the in particular the centering means 11, 12 are not enclosed by the capsule, i.e. they are exposed to the surrounding atmosphere. This is suitable when the centering means are female centering means since theses could be deformed during the HIP process if enclosed in an airtight capsule.

Figure 8 shows an alternative in which covering pieces 40 have been applied over the centering means 11, 12. The covering piece has a first flat surface 40a and an opposite second surface 40b which is provided with either a protrusion or a recess 40c. The protrusion or the recess in the covering pieces are adopted to fit into, or to receive, a male or female centering means 11, 12. One advantage thereof is that the covering piece prevents the female centering means from deforming during the HIP process. Another advantage is that the covering piece prevents the male centering means from piercing the capsule during the HIP process. The covering pieces are preferably manufactured in mild steel and to prevent the covering pieces from bonding to the pre-manufactured core during HIP, a layer of boron nitride may be applied between the covering piece and the pre-manufactured body. Figure 8 further shows an alternative form of centering means, i.e. cone shaped.

Preferably, the male centering means is in the form of a truncated cone with an inclination angle of maximum 60°, preferably 40 - 60°. The female centering means is a recess, i.e. a bore, with the shape of truncated cone with an inclination angle of maximum 60°, preferably 40 - 60°.

When covering pieces are used, it is preferred that the recesses or the protrusions 40c also are in the form of truncated cones with an inclination angle of 40 - 60°. Tests have shown that a male centering means in the form of a truncated cone with an inclination angle of 40 - 60° after HIP is easy to separate from a covering piece having a recess with the same shape. The reason for this is believed to be due to that little deformation occurs to the recess during HIP.

Figure 9 shows an alternative in which the core surface 5a and the upper end 4 of core are covered by metallic cladding material 8 such that only one surface 3a of the core is free of cladding material. In this case an upper wall 9 may be arranged on top of the cladding material in the filled capsule. The upper wall 9 is manufactured in tool steel and is designed such that it covers the cladding material in the upper portion of the capsule. The upper wall 9 comprises a centering means 12 for engagement with a corresponding center in a lathe.

It is important that the centering means are not covered by cladding material. In particular when metallic cladding material in the form of powder is used, it may therefore be advantageously to arrange a sealing element in the capsule to prevent cladding material from entering between the capsule and the centering means in the core. Figure 10 shows an embodiment of the inventive method in which a sealing element 14 in the form a circumferential edge has been arranged around the end portion 3 of the core 5. The edge 14 may for example be short tube section or a pleat in the capsule wall.

Figure 11 shows an alternative, in which the core 5 only partially is covered or embedded in metallic cladding material. In this case the core portion 5 has a parallel-piped shape and is positioned in the capsule such that only three of its side surfaces and its upper surface 4a are covered with metallic cladding material. However, also cores of other geometrical forms may be only partially embedded in cladding material.

Figure 12 shows the machining of the HIP:ed solid body 20 resulting from the setup of figure 10 by milling. However also other metal machining apparatuses may be used for example Electric Discharge Machining. The solid body 20 is placed on a work table 60 which comprises at least one center 64. The solid body is placed such that the center 64 on the work table engages the centering means 11 in the bottom surface 3a of the solid body 20. The control unit of the mill is programmed with a predetermined distance between a milling tool 68 and the center 64 in the work table. The control unit moves the milling tool 68 towards and along the cladding material 8 until the predetermined distance between milling tool and center is reached. The solid body should preferably comprise two centering means in order to ensure that the solid body is in locked position with zero degrees freedom of movement during milling. A second centering means may therefore be provided adjacent the first centering means on the bottom surface of the solid body (not shown in figure 12) The work table should then comprise two corresponding centers adjacent to each other (not shown in figure 12).

Although particular embodiments have been described in detail, this has been done for illustrative purposes only and is not intended to be limiting. In particular it is contemplated that various substitutions, alterations and modifications may be made within the scope of the appended claims.

## Claims

1. A method for manufacturing a metallic component (50) having a core (5) and a metallic cladding (60), comprising the following steps:
a. arranging a capsule (10) and a core (5) such that the capsule (10) at least partially surround the core (5) and such that a space (6) is formed between at least a portion of the core (5) and a portion of the capsule (10);
b. filling the space (6) with metallic cladding material (8) such that the metallic cladding material (8) covers at least a portion of the core (5);
c. evacuating air from the capsule (10) and sealing the capsule (10);
d. subjecting the capsule (10) to Hot Isostatic Pressing (HIP) at a predetermined temperature, a predetermined pressure and for a predetermined time so that the metallic cladding material (8) is bonded to the core (5) and forms a solid body (20);
e. subjecting the solid body (20) to a metal machining operation in which the metallic cladding material (8) is machined in a metal machining apparatus (30) to a metallic cladding (60) of a predetermined thickness;
**characterized in that**
the core (5), prior to the step of Hot Isostatic Pressing, is provided with at least one centering means (11, 12) for centering the solid body (20) obtained in the step of Hot Isostatic Pressing in the metal machining apparatus (30) and
wherein the solid body (20) is centered in the metal machining apparatus (30) by engagement between the at least one centering means (11, 12) in the solid body (20) and at least one corresponding center (34, 36, 64) in the metal machining apparatus (30, 60).

2. The method according to any of claim 1, wherein the centering means (11, 12) is a female centering means (11) or a male centering means (12).

3. The method according to claim 2, wherein the male centering means (12) is a truncated cone or a cone.

4. The method according claim 2, wherein the female centering means (11) is a recess having the shape of a truncated cone or the shape of a cone.

5. The method according to any of claims 1 - 4, wherein said at least one centering means (11, 12) is provided on a first surface (3a) of the core (5), whereby the core (5) is supported on said first surface (3a) in the capsule (10).

6. The method according to any of claims 1 - 5, wherein the core (5) comprises a second surface (4a) which comprises a second centering means (11, 12).

7. The method according to claim 6, wherein the first and the second centering means (11, 12) are provided on opposite surfaces (3a, 4a) of the core (5) and aligned along a perpendicular axis (13) which extends through the center of the core (5) and through both centering means (11, 12).

8. The method according to any of claims 1 - 7, wherein said at least one centering means (11, 12) is arranged on a surface (3a, 4a) of the core (5) which is free of cladding material (8).

9. The method according to any of claims 1 -8, wherein a sealing means (14) is arranged in the capsule (10) to prevent cladding material (8) from entering between the capsule (10) and a surface (3a, 4a) of the core (5) which is provided with centering means (11, 12).

10. The method according to any of claims 2 - 9, comprising the step of arranging a cover piece (40) over the at least one centering means (11, 12) prior to the step of Hot Isostatic Pressing, wherein the cover piece (40) comprises a protrusion (40c) which is adopted to be fully received in a female centering means (11) or wherein the cover piece (40) comprises a recess (40d) which is adopted to fully receive a male centering means (12).

11. The method according to claims 1-10, wherein said at least one centering means (11, 12) is provided on a first surface (3a) of the core (5), wherein the capsule (10) is attached to the core (5) and arranged such that the capsule (5), after the step of filling and sealing of the capsule (10), encloses the cladding material (8) and such that at least a first centering means (11, 12) is exposed.

12. The method according to any of claims 1 - 11, wherein the machining operation for machining the metallic cladding (8) on the core (5) to a metallic cladding (60) with a predetermined thickness is any of turning, milling or Electric Discharge Machining.

13. The method according to any of claims 1 - 12, wherein the metal machining apparatus (30) is a lathe, a milling cutter or an Electric Discharge Machining apparatus.

## Patentansprüche

1. Verfahren zur Herstellung einer metallischen Komponente (50), die einen Kern (5) und eine metallische Ummantelung (60) aufweist, umfassend die folgenden Schritte:
a. Anordnen einer Kapsel (10) und eines Kerns (5) derart, dass die Kapsel (10) den Kern (5) zumindest teilweise umgibt, und derart, dass ein Raum (6) zwischen mindestens einem Abschnitt des Kerns (5) und einem Abschnitt der Kapsel (10) gebildet wird;
b. Füllen des Raums (6) mit metallischem Ummantelungsmaterial (8) derart, dass das metallische Ummantelungsmaterial (8) mindestens einen Abschnitt des Kerns (5) bedeckt;
c. Evakuieren von Luft aus der Kapsel (10) und Versiegeln der Kapsel (10);
d. Heißisostatisches Pressen (HIP) der Kapsel (10) mit einer vorbestimmten Temperatur, einem vorbestimmten Druck und über eine vorbestimmte Zeit hinweg, sodass das metallische Ummantelungsmaterial (8) mit dem Kern (5) verbunden wird und einen Festkörper (20) bildet;
e. Durchführen eines Metallbearbeitungsvorgangs an dem Festkörper (20), bei dem das metallische Ummantelungsmaterial (8) in einer Metallbearbeitungsvorrichtung (30) zu einer metallischen Ummantelung (60) mit einer vorbestimmten Dicke ausgebildet wird;
**dadurch gekennzeichnet, dass**
der Kern (5), vor dem Schritt des heißisostatischen Pressens, mit mindestens einem Zentriermittel (11, 12) zum Zentrieren des Festkörpers (20), der im Schritt des heißisostatischen Pressens erhalten wurde, in der Metallbearbeitungsvorrichtung (30) versehen wird, und
wobei der Festkörper (20) in der Metallbearbeitungsvorrichtung (30) durch Eingriff zwischen dem mindestens einen Zentriermittel (11, 12) in dem Festkörper (20) und mindestens einer entsprechenden Mitte (34, 36, 64) in der Metallbearbeitungsvorrichtung (30, 60) zentriert wird.

2. Verfahren nach Anspruch 1, wobei es sich bei dem Zentriermittel (11, 12) um ein Innenzentriermittel (11) oder ein Außenzentriermittel (12) handelt.

3. Verfahren nach Anspruch 2, wobei das Außenzentriermittel (12) ein Kegelstumpf oder ein Kegel ist.

4. Verfahren nach Anspruch 2, wobei das Innenzentriermittel (11) eine Aussparung ist, die die Form eines Kegelstumpfs oder die Form eines Kegels aufweist.

5. Verfahren nach einem der Ansprüche 1 - 4, wobei das mindestens eine Zentriermittel (11, 12) an einer ersten Fläche (3a) des Kerns (5) vorgesehen ist, wobei der Kern (5) in der Kapsel (10) auf der ersten Fläche (3a) aufliegt.

6. Verfahren nach einem der Ansprüche 1 - 5, wobei der Kern (5) eine zweite Fläche (4a) umfasst, die ein zweites Zentriermittel (11, 12) umfasst.

7. Verfahren nach Anspruch 6, wobei das erste und das zweite Zentriermittel (11, 12) an entgegengesetzten Flächen (3a, 4a) des Kerns (5) vorgesehen und entlang einer senkrechten Achse (13), die sich durch die Mitte des Kerns (5) und durch beide Zentriermittel (11, 12) hindurch erstreckt, ausgerichtet sind.

8. Verfahren nach einem der Ansprüche 1 - 7, wobei das mindestens eine Zentriermittel (11, 12) an einer Fläche (3a, 4a) des Kerns (5) angeordnet ist, die frei von Ummantelungsmaterial (8) ist.

9. Verfahren nach einem der Ansprüche 1 - 8, wobei in der Kapsel (10) ein Versiegelungsmittel (14) angeordnet ist, um ein Eindringen von Ummantelungsmaterial (8) zwischen der Kapsel (10) und einer Fläche (3a, 4a) des Kerns (5), die mit Zentriermitteln (11, 12) versehen ist, zu verhindern.

10. Verfahren nach einem der Ansprüche 2 - 9, umfassend, vor dem Schritt des heißisostatischen Pressens, den Schritt des Anordnens eines Abdeckstücks (40) über dem mindestens einen Zentriermittel (11, 12), wobei das Abdeckstück (40) einen Vorsprung (40c) umfasst, der dazu ausgelegt ist, vollständig in einem Innenzentriermittel (11) aufgenommen zu werden, oder wobei das Abdeckstück (40) eine Aussparung (40d) umfasst, die dazu ausgelegt ist, ein Außenzentriermittel (12) vollständig aufzunehmen.

11. Verfahren nach Anspruch 1 - 10, wobei das mindestens eine Zentriermittel (11, 12) an einer ersten Fläche (3a) des Kerns (5) vorgesehen ist, wobei die Kapsel (10) an dem Kern (5) befestigt und derart angeordnet ist, dass die Kapsel (5), nach dem Schritt des Füllens und Versiegelns der Kapsel (10), das Ummantelungsmaterial (8) umschließt, und derart, dass mindestens ein erstes Zentriermittel (11, 12) freigelegt ist.

12. Verfahren nach einem der Ansprüche 1 - 11, wobei es sich bei dem Bearbeitungsvorgang zum Ausbilden der metallischen Ummantelung (8) auf dem Kern (5) zu einer metallischen Umhüllung (60) mit einer vorbestimmten Dicke beliebig um Drehen, Fräsen oder Funkenerodieren handelt.

13. Verfahren nach einem der Ansprüche 1 - 12, wobei die Metallbearbeitungsvorrichtung (30) eine Drehmaschine, ein Fräser oder eine Vorrichtung zum Funkenerodieren ist.

## Revendications

1. Procédé de fabrication d'un composant métallique (50) ayant un noyau (5) et un revêtement métallique (60), comprenant les étapes suivantes :
a.l'agencement d'une capsule (10) et d'un noyau (5) de sorte que la capsule (10) entoure au moins partiellement le noyau (5) et de sorte qu'un espace (6) soit formé entre au moins une partie du noyau (5) et une partie de la capsule (10) ;
b.l'obturation de l'espace (6) avec le matériau de revêtement métallique (8) de sorte que le matériau de revêtement métallique (8) recouvre au moins une partie du noyau (5) ;
c. l'évacuation de l'air de la capsule (10) et la fermeture de la capsule (10) ;
d. la soumission de la capsule (10) à la Compression Isostatique à Chaud (HIP) à une température prédéterminée, une pression prédéterminée et pour une durée prédéterminé de sorte que le matériau de revêtement métallique (8) est lié au noyau (5) et forme un corps solide (20) ;
e. la soumission du corps solide (20) à une opération d'usinage métallique dans laquelle le matériau de revêtement métallique (8) est usiné dans un appareillage d'usinage métallique (30) à un revêtement métallique (60) d'épaisseur prédéterminée ;
**caractérisé en ce que**
le noyau (5), avant l'étape de Compression Isostatique à Chaud, est fourni avec au moins un moyen de centrage (11, 12) pour un centrage du corps solide (20) obtenu à l'étape de Compression Isostatique à Chaud dans le dispositif d'usinage métallique (30) et
dans lequel le corps solide (20) est centré dans l'appareil d'usinage métallique (30) par engagement entre l'au moins un moyen de centrage (11, 12) dans le corps solide (20) et au moins un centre correspondant (34, 36, 64) dans l'appareil d'usinage métallique (30, 60) .

2. Procédé selon l'une quelconque des revendications 1, dans lequel le moyen de centrage (11, 12) est un moyen de centrage femelle (11) ou un moyen de centrage mâle (12).

3. Procédé selon la revendication 2, dans lequel le moyen de centrage mâle (12) est un cône tronqué ou un cône.

4. Procédé selon la revendication 2, dans lequel le moyen de centrage femelle (11) est un creux ayant la forme d'un cône tronqué ou la forme d'un cône.

5. Procédé selon l'une quelconque des revendications 1 à 4, dans lequel ledit au moins un moyen de centrage (11, 12) est fourni sur une première surface (3a) du noyau (5), où le noyau (5) est soutenu sur ladite première surface (3a) dans la capsule (10) .

6. Procédé selon l'une quelconque des revendications 1 à 5, dans lequel le noyau (5) comprend une deuxième surface (4a) qui comprend un deuxième moyen de centrage (11, 12).

7. Procédé selon la revendication 6, dans lequel le premier et le deuxième moyens de centrage (11, 12) sont fournis sur des surfaces opposées (3a, 4a) du noyau (5) et alignés le long d'un axe perpendiculaire (13) qui s'étend à travers le centre du noyau (5) et à travers les deux moyens de centrage (11, 12) .

8. Procédé selon l'une quelconque des revendications 1 à 7, dans lequel ledit au moins un moyen de centrage (11, 12) est agencé sur une surface (3a, 4a) du noyau (5) qui est exempte de matériau de revêtement (8).

9. Procédé selon l'une quelconque des revendications 1 à 8, dans lequel un moyen de fermeture (14) est agencé dans la capsule (10) pour empêcher le matériau de revêtement (8) de pénétrer entre la capsule (10) et une surface (3a, 4a) du noyau (5) qui est fournie avec des moyens de centrage (11, 12).

10. Procédé selon l'une quelconque des revendications 2 à 9, comprenant l'étape d'agencement d'une pièce de recouvrement (40) sur l'au moins un moyen de centrage (11, 12) avant l'étape de Compression Isostatique à Chaud, dans lequel la pièce de recouvrement (40) comprend une saillie (40c) qui est adoptée pour être entièrement reçue dans un moyen de centrage femelle (11) ou dans lequel la pièce de recouvrement (40) comprend un creux (40d) qui est adopté pour recevoir pleinement un moyen de centrage mâle (12).

11. Procédé selon les revendications 1 à 10, dans lequel ledit au moins un moyen de centrage (11, 12) est fourni sur une première surface (3a) du noyau (5), dans lequel la capsule (10) est fixée au noyau (5) et agencée de sorte que la capsule (5), après l'étape de remplissage et de fermeture de la capsule (10), entoure le matériau de revêtement (8) et de sorte qu'au moins un premier moyen de centrage (11, 12) est exposé.

12. Procédé selon l'une quelconque des revendications 1 à 11, dans lequel l'opération d'usinage pour l'usinage du revêtement métallique (8) sur le noyau (5) à un revêtement métallique (60) avec une épaisseur prédéterminée est l'une quelconque d'une rotation, d'un filetage ou d'un Usinage par Étincelage.

13. Procédé selon l'une quelconque des revendications 1 à 12, dans lequel l'appareil d'usinage métallique (30) est un tour, une fraise à fileter ou un appareil d'usinage à décharge électrique.
